(19) Europäisches Patentamt
European Patent Office
Office européen des brevets

(11) **EP 3 690 700 B1**

(12) **EUROPEAN PATENT SPECIFICATION**

(45) Date of publication and mention
of the grant of the patent:
**18.12.2024 Bulletin 2024/51**

(21) Application number: **19797155.9**

(22) Date of filing: **02.08.2019**

(51) International Patent Classification (IPC):
**G06F 18/22** (2023.01)      **G06V 10/46** (2022.01)
**G06V 10/75** (2022.01)      **G06V 10/74** (2022.01)

(52) Cooperative Patent Classification (CPC):
**G06V 10/462; G06F 18/22; G06V 10/751;
G06V 10/761**

(86) International application number:
**PCT/CN2019/099122**

(87) International publication number:
**WO 2020/119144 (18.06.2020 Gazette 2020/25)**

(54) **IMAGE SIMILARITY CALCULATION METHOD AND DEVICE, AND STORAGE MEDIUM**

VERFAHREN, VORRICHTUNG UND SPEICHERMEDIUM ZUR KALKULATION EINER BILDÄHNLICHKEIT

PROCÉDÉ ET DISPOSITIF DE CALCUL DE SIMILARITÉ D'IMAGES ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.12.2018 CN 201811506274**

(43) Date of publication of application:
**05.08.2020 Bulletin 2020/32**

(73) Proprietor: **XIAMEN MEIYA PICO INFORMATION
CO., LTD**
**Xiamen, Fujian 361000 (CN)**

(72) Inventors:
• **NIE, Zhiqiao**
**Fujian 361000 (CN)**
• **YAN, Chenjia**
**Fujian 361000 (CN)**
• **LIN, Shuqiang**
**Fujian 361000 (CN)**
• **ZHANG, Yongguang**
**Fujian 361000 (CN)**
• **WU, Hongwei**
**Fujian 361000 (CN)**
• **ZHOU, Chengzu**
**Fujian 361000 (CN)**

(74) Representative: **Petraz, Gilberto Luigi et al**
**GLP S.r.l.**
**Viale Europa Unita, 171**
**33100 Udine (IT)**

(56) References cited:
WO-A1-2013/071141      CN-A- 101 859 326
CN-A- 108 171 712      CN-A- 108 960 280
CN-A- 109 740 633      US-A1- 2014 376 822

• YE FENG ET AL: "Multipurification of matching
pairs based on ORB feature and PCB alignment
case study", JOURNAL OF ELECTRONIC
IMAGING., vol. 27, no. 03, 6 June 2018
(2018-06-06), US, pages 1, XP055773675, ISSN:
1017-9909, DOI: 10.1117/1.JEI.27.3.033029
• ZHOU WENGANG ET AL: "Recent Advance in
Content-based Image Retrieval: A Literature
Survey", 2 September 2017 (2017-09-02), pages 1
- 22, XP055773674, Retrieved from the Internet
<URL:https://arxiv.org/pdf/1706.06064.pdf>
[retrieved on 20210209]

EP 3 690 700 B1

**Description**

CROSS-REFERENCE TO RELATED APPLICATIONS

This application claims priority of Chinese Patent Application No. 2018115062742 filed on December 10, 2018.

TECHNICAL FIELD

The present disclosure relates to the field of image recognition, and in particular, to a method, apparatus, and storage medium for calculating image similarity.

BACKGROUND

Image similarity calculation is mainly applied to give a score for the similarity degree between the content of two images, and the similarity degree of the image content is judged according to the level of the score. It may be used for computer vision detection and the acquisition of a position of a tracking target, and find an area close to that in the image according to an existing template. On the other hand, it may be used for image retrieval based on image content, which is usually known as search by image.

Image similarity algorithms include comparison of basic features of statistical images such as histogram matching, mathematical matrix decomposition, and image similarity calculation based on feature points. The comparison of the basic features of statistical images involves extracting the basic features of an original image and a target image, such as grayscale statistical features (grayscale histogram) and image texture features (energy, entropy, moment of inertia, local stationarity, etc. for a grayscale co-occurrence matrix), and then comparing the resultant basic feature values of the original image and the target image to obtain the similarity between the images. The histogram matching reflects the probability distribution of the grayscale values of the image pixels, ignoring the position information of the pixels. Each image has its own feature points that characterize some of relatively important locations in the image that are similar to knee points in a function. Moreover, this method of comparing image similarity is based on statistical features, which reflects the globality of the image, and does not reflect the local features of the image well, so the comparison result will have relatively large errors.

The image similarity algorithm based on feature points judges whether two images are consistent by the number of matching points found. Since mismatch may occur in the feature points matching, the image similarity algorithm based on feature points has a high error rate. The patent document of publication No. CN103295022A discloses an image similarity calculation system which performs grayscale processing on a first image and a second image respectively to obtain a first grayscale image and a second grayscale image, and process the second grayscale image according to the size of the first grayscale image and the second grayscale image to obtain a target image. The system then matches each of the pixels in the first grayscale image to a respective pixel in the target image to construct a set of pixel point pairs. Finally, the system calculates the similarity between the first image and the second image according to the obtained grayscale value of each of the pixel points in the set of pixel point pairs. However, mismatch readily occurs during the pixel point matching, resulting in large errors in the final result.

The paper document "Multipurification of matching paires based on ORB feature and PCB alignment case study" published by Feng Ye etc. (at Journal of Electronic Imaging 27(3), 033029 (2018), doi: 10.1117/1.JEI.27.3.033029) discloses an improved algorithm based on multipurication in PCB matching and positioning, to address the scale invariance and mismatching problems of ORB (oriented FAST and rotated BRIEF).

Therefore, how to improve the accuracy of the image similarity judgment result is an issue that needs to be solved urgently.

SUMMARY

The above-mentioned feature point-based image similarity algorithm is easy to cause mismatching and the like. The present disclosure provides a method for calculating image similarity, which comprises the steps of:

S1: extracting feature points and corresponding feature vectors from a first image and a second image, respectively;
S2: pairing all the feature points in the first image with all the feature points in the second image according to similarity by comparing first distances between the feature vectors in the first image and the feature vectors in the second image;
S3: sorting the paired feature points according to the similarity from high to low, and selecting top N feature point pairs in the first image and the second image;
S4: respectively randomly selecting n reference points from the top N feature point pairs in the first image and the second image, and respectively calculating X-direction and Y-direction relative positions of remaining feature points relative to the n reference points in the first image, and respectively calculating X-direction and Y-direction relative positions of remaining feature points relative to the n reference points in the second image; and

S5: calculating an X-axis distance according to the X-direction relative positions of the remaining feature points in the first image and the second image relative to the reference points, calculating a Y-axis distance according to the Y-direction relative positions of the remaining feature points relative to the reference points in the first image and the second image, and with respect to the X-axis distance and the Y-axis distance, setting a threshold range to determine whether the first image and the second image are a same image,

wherein the step S5 specifically comprises the steps of:

S51: setting the X-direction relative positions $x_{11}, \dots, x_{1i}, \dots, x_{1n}$ of one of the remaining feature points relative to the n reference points in the first image as vector A;

S52: setting the X-direction relative positions $x_{21}, \dots, x_{2i}, \dots, x_{2n}$ of one of the remaining feature points relative to the n reference points in the second image as vector B;

S53: calculating the X-axis distance between vector A and vector B;

S54: calculating in a same manner the Y-axis distance between vectors of the Y-direction relative positions of one of the remaining feature points in the first image and the second image with respect to the n reference points.

Further, an approach for extracting the feature points in the step S1 comprises a sift, orb, surf, or brisk feature point extraction algorithm. Therefore, the approach of extracting feature points is more diverse and is extensively applicable.

Further, the sift feature point extraction algorithm specifically comprises the steps of:

S11: detecting extreme values of a DoG scale space;

S12: deleting unstable extreme value points;

S13: determining a main direction of the feature points; and

S14: generating a descriptor of the feature points to obtain a feature vector of the feature points.

Further, the first distances in the step S2 are an Euclidean distance, a Manhattan distance or a Minkowski distance, and minimum distance classification is adopted as a criterion of the similarity between the feature points in the first image and the second image. By determining the similarity between the feature points in the first image and the second image, the feature points with the highest similarity in the first image and the second image can be obtained as reference points, thereby effectively reducing errors caused by the feature point mismatching.

Further, in the step S4 the respectively calculating the relative positions of the remaining feature points in the first image and the second image relative to the reference points adopts the following formula:

$$\begin{cases} x_0 = x_1 - x_2 \\ y_0 = y_1 - y_2 \end{cases}$$

Wherein $x_0$ represents a relative position in the first image or the second image in a coordinate axis x direction, $x_1$ represents a coordinate position of a remaining feature point in the first image or the second image in the x direction, and $x_2$ represents a coordinate position of a reference point in the first image or the second image in the x direction, $y_0$ represents a relative position in the first image or the second image in a coordinate axis y direction, $y_1$ represents a coordinate position of a remaining feature point in the first image or the second image in the x direction, and $y_2$ represents a coordinate position of a reference point in the first image or the second image in the y direction. The calculation is more accurate by respectively calculating the relative positions of the remaining feature points in the first image and the second image relative to the reference points and by setting them as relative position vectors.

Further, the X-axis distance and the Y-axis distance in the step S5 comprise an included-angle cosine distance, a Manhattan distance, or a Chebyshev distance. By calculating as the criterion for the image similarity the X-axis distance and the Y-axis distance of the X-direction or Y-direction relative position vectors of the remaining feature points in the first image and the second image and the reference points, the accuracy of image similarity determination is further ensured.

Further, the included-angle cosine distance is calculated as:

$$\cos \theta = \frac{A \cdot B}{\|A\| \|B\|} = \frac{\sum_{i=1}^{n} A_i \times B_i}{\sqrt{\sum_{i=1}^{n} (A_i)^2} \times \sqrt{\sum_{i=1}^{n} (B_i)^2}}$$

Wherein $A_i$ and $B_i$ represent components of vector A and vector B, respectively.

Further, the step S5 further comprises summing the X-axis distance and the Y-axis distance, and setting a threshold range for the summed value, wherein exceeding the threshold range indicates a similar image, or a different image otherwise.

An apparatus for image similarity calculation is further proposed which comprises a memory, a processor, and a computer program stored in the memory and executable on the processor, characterized in that when executing the computer program the processor implements the steps of any one of the methods described above.

A computer-readable storage medium storing a computer program is further proposed, which computer program, when executed by a processor, implements the steps of any one of the methods described above.

With regard to the image similarity algorithm based on feature points, it is found that when the two images contain the same object, the layouts of the feature points in the two images are basically the same. When the two images contain different objects, the layouts of the feature points in the two images differ significantly. Therefore, the present disclosure proposes a method, apparatus, and storage medium for calculating image similarity, which use relative position information based on feature points to detect the similarity between two pictures. First, feature points and corresponding feature vectors in the first image and the second image are extracted, the feature points are compared, and the most matching feature points act as reference points to measure the distance between the remaining points and the reference points. It is statistically judged whether the two images are similar images according to the distance relationship. This approach can effectively overcome the detection error caused by the mismatch of the feature points, providing an effective way for image similarity calculation.

BRIEF DESCRIPTION OF THE DRAWINGS

In order to more clearly illustrate the technical solutions in the embodiments of the present disclosure, the following drawings will be briefly described in the description of the embodiments. It is apparent that the drawings in the following description are only some of the embodiments of the present disclosure, and that other drawings can be obtained by those skilled in the art based on these drawings without paying any inventive effort.

FIG. 1 is a schematic flow chart of a method for calculating image similarity according to an embodiment of the present disclosure;
FIG. 2 is a flowchart of step S1 of a method for calculating image similarity according to an embodiment of the present disclosure; and
FIG. 3 is a flowchart of step S5 of a method for calculating image similarity according to an embodiment of the present disclosure.

DETAILED DESCRIPTION

In order to render the objectives, technical solutions and advantages of the present disclosure more apparent, the present disclosure will be further described in detail with reference to the accompanying drawings. It is apparent that the described embodiments are only a part of the embodiments of the present disclosure, and not all of them. All other embodiments obtained by a person of ordinary skill in the art based on the embodiments of the present disclosure without paying inventive effort fall within the scope of the disclosure.

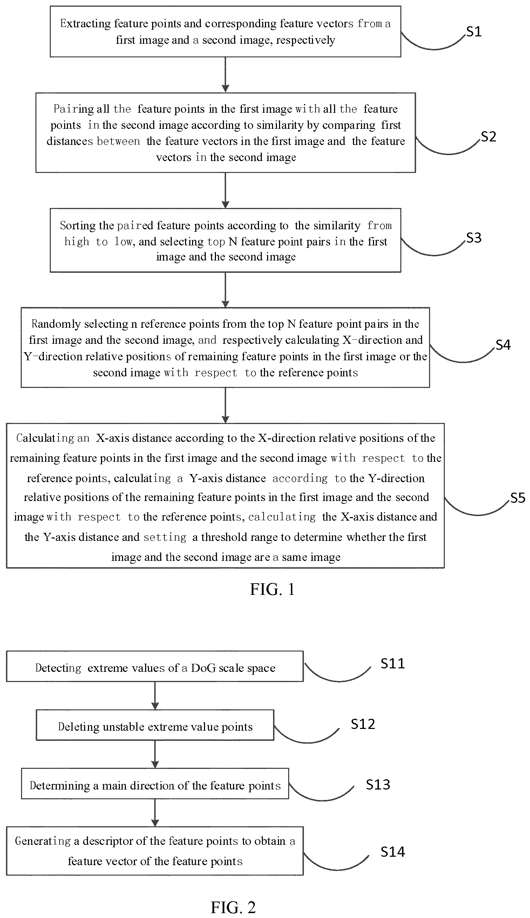

An embodiment of the present disclosure discloses a method for calculating image similarity as shown in FIG. 1, which includes the following steps:

S1: extracting feature points and corresponding feature vectors from a first image and a second image, respectively;
S2: pairing all the feature points in the first image with all the feature points in the second image according to similarity by comparing first distances between the feature vectors in the first image and the feature vectors in the second image;
S3: sorting the paired feature points according to the similarity from high to low, and selecting top N feature point pairs in the first image and the second image;
S4: randomly selecting n reference points from the top N feature point pairs in the first image and the second image, and respectively calculating X-direction and Y-direction relative positions of remaining feature points in the first image or the second image relative to the reference points; and
S5: calculating an X-axis distance according to the X-direction relative positions of the remaining feature points in the first image and the second image relative to the reference points, calculating a Y-axis distance according to the Y-direction relative positions of the remaining feature points in the first image and the second image relative to the reference points, calculating the X-axis distance and the Y-axis distance and setting a threshold range to determine whether the first image and the second image are a same image.

An approach for extracting the feature points in the step S1 includes one or more of a sift feature point extraction algorithm, an orb feature point extraction algorithm, a surf feature point extraction algorithm, or a brisk feature point extraction algorithm. Finally, the feature points and the feature vectors of the first image and the second image are obtained.

In a preferred embodiment, as shown in FIG. 2, the sift feature point extraction algorithm specifically includes the following steps:

S11: detecting extreme values of a DoG scale space;
S12: deleting unstable extreme value points;
S13: determining a main direction of the feature points; and
S14: generating a descriptor of the feature points to obtain a feature vector of the feature points.

In another specific embodiment, the orb feature point extraction algorithm specifically includes the following steps:

S11: performing Fast feature extraction; and
S12: performing rBRIEF feature description.

In another specific embodiment, the surf feature point extraction algorithm specifically includes the following steps:

S11: constructing a Hessian Hessian matrix;
S12: generating a scale space;
S13: initially determining the feature points and accurately locating the feature points by using non-maximum value suppression;
S14: selecting and determining a main direction of the feature points; and
S15: constructing a SURF feature point description operator.

In another specific embodiment, the brisk feature point extraction algorithm specifically includes the following steps:

S11: detecting the feature points; and
S12: performing feature point description.

It is determined which feature point extraction algorithm(s) are adopted according to the specific conditions of the first image and the second image, and thus it can be seen that the method is extensively applicable without being limited by the category of the feature point extraction algorithm. Sift and surf can provide relatively high accuracy and stable results. Sift is somewhat more accurate than surf, but it is slower in speed. Brisk sometimes has the best accuracy. Orb is very fast, but it is the most prone to problems in terms of the accuracy. Therefore, an appropriate feature point extraction approach can be selected according to specific situations and usage conditions.

In addition, the first distances in the step S2 are an Euclidean distance, a Manhattan distance or a Minkowski distance, and minimum distance classification is adopted as a criterion of the similarity between the feature points in the first image and the second image. By determining the similarity of the feature points in the first image and the second image, it is possible to obtain top N feature points in the first image and the second image that have the highest similarity, from which n feature points are randomly selected as the reference points, thus effectively reducing errors due to feature point mismatching.

In a preferred embodiment, the Euclidean distance may be selected as the distance calculation approach in the minimum distance classification. The Euclidean distance is calculated as follows.

Assuming an n-dimensional vector $a = (x_{11}, x_{12},..., x_{1n})$ and an n-dimensional vector $b = (x_{21}, x_{22},...., x_{2n})$, the Euclidean distance between the vectors a and b is calculated as:

$$d = \sqrt{\sum_{k=1}^{n}(x_{1k} - x_{2k})^2}$$

In another specific embodiment, the Manhattan distance may also be used as the distance calculation approach in the minimum distance classification. The Manhattan distance is calculated as follows.

Assuming two n-dimensional vectors $a = (x_{11}, x_{12},...., x_{1n})$ and $b = (x_{21}, x_{22},. . . . . x_{2n})$, the Manhattan distance between the vectors a and b is calculated as:

$$d = \sum_{k=1}^{n} |x_1 - x_2|$$

In another specific embodiment, the Minkowski distance may also be used as the distance calculation approach in the minimum distance classification. The Minkowski distance is calculated as follows.

Assuming two n-dimensional vectors $a = (x_{11}, x_{12},...., x_{1n})$ and $b = (x_{21}, x_{22},...., x_{2n})$, the Minkowski distance between the vectors a and b is calculated as:

$$d = \sqrt[p]{\sum_{k=1}^{n} |x_1 - x_2|^p}$$

Where p is a variable parameter.

When p=1, it is the Manhattan distance.
When p=2, it is the Euclidean distance.
When p→ ∞, it is the Chebyshev distance.

The formula is different dependent upon different values of p, so with the different parameter p, the Minkowski distance can be expressed as a category of distance. The minimum distance calculation formula can be used to intuitively embody the minimum distance between the feature vectors in the first image and the second image, and is suitable for the similarity metric of the feature points of the first image and the second image.

the respectively calculating the relative positions of the remaining feature points in the first image and the second image relative to the reference points in the step S4 adopts the following formula:

$$\begin{cases} x_0 = x_1 - x_2 \\ y_0 = y_1 - y_2 \end{cases}$$

Where $x_0$ represents a relative position in the first image or the second image in a coordinate axis x direction, $x_1$ represents a coordinate position of a remaining feature point in the first image or the second image in the x direction, and $x_2$ represents a coordinate position of a reference point in the first image or the second image in the x direction, $y_0$ represents a relative position in the first image or the second image in a coordinate axis y direction, $y_1$ represents a coordinate position of a remaining feature point in the first image or the second image in the x direction, and $y_2$ represents a coordinate position of a reference point in the first image or the second image in the y direction. This way, the relative positions of the remaining feature points in the first image or the second image relative to the reference points can be obtained by selecting from the most similar N feature point pairs n feature points as the reference points.

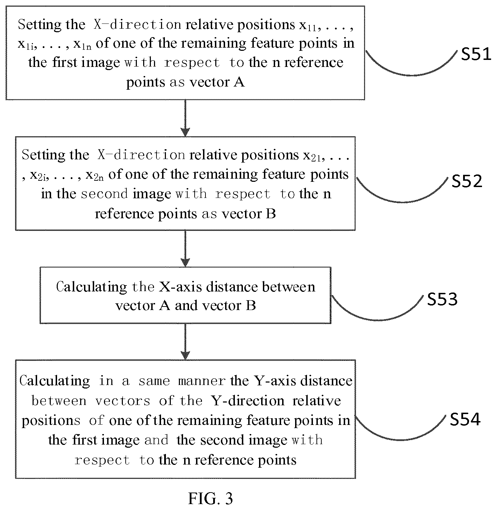

As shown in FIG. 3, step S5 includes the following steps:

S51: setting the X-direction relative positions $x_{11}, ... , x_{1i}, ... , x_{1n}$ of one of the remaining feature points in the first image relative to the n reference points as vector A;
S52: setting the X-direction relative positions $x_{21}, ... , x_{2i}, ... , x_{2n}$ of one of the remaining feature points in the second image relative to the n reference points as vector B;
S53: calculating the X-axis distance between vector A and vector B;
S54: calculating in a same manner the Y-axis distance between vectors of the Y-direction relative positions of one of the remaining feature points in the first image and the second image relative to the n reference points.

The X-axis distance and the Y-axis distance in the step S5 comprise an included-angle cosine distance, a Manhattan distance, or a Chebyshev distance.

In a preferred embodiment, the X-axis distance and the Y-axis distance are an included-angle cosine distance, which is calculated as:

$$\cos \theta = \frac{A \cdot B}{\|A\|\|B\|} = \frac{\sum_{i=1}^{n} A_i \times B_i}{\sqrt{\sum_{i=1}^{n} (A_i)^2} \times \sqrt{\sum_{i=1}^{n} (B_i)^2}}$$

Where $A_i$ and $B_i$ represent components of vector A and vector B, respectively.

In another specific embodiment, the X-axis distance and the Y-axis distance may also be a Manhattan distance, which is calculated as:

$$d = \sum_{k=1}^{n} |x_{1k} - x_{2k}|$$

In another specific embodiment, the X-axis distance and the Y-axis distance may also be a Chebyshev distance, which is calculated as:

$$d = \max_{k} |x_{1k} - x_{2k}|$$

Where max means taking the maximum value.

The X-axis distance and the Y-axis distance may be calculated according to the actual situation using a reasonable distance formula.

Step S5 further includes summing the X-axis distance and the Y-axis distance, and setting a threshold range for the summed value, wherein exceeding the threshold range indicates a similar image, or a different image otherwise. The threshold range may be adjusted according to specific situations.

Additionally, each of the instances of the present disclosure may be implemented with a data processing program executed by a data processing device such as a computer. Apparently, the data processing program constitutes the present disclosure. Further, the data processing program that is usually stored in a storage medium is executed by directly reading the program from the storage medium or by installing or copying the program to a storage device (such as a hard disk and/or a memory) of the data processing device. Therefore, such a storage medium also constitutes the present disclosure. The storage medium can use any type of recording means, such as a paper storage medium (such as a paper tape, etc.), a magnetic storage medium (such as a floppy disk, a hard disk, a flash memory, etc.), an optical storage medium (such as a CD-ROM, etc.), a magneto-optical storage medium (such as a MO, etc.), and the like.

The present disclosure therefore further discloses a non-volatile storage medium in which a data processing program is stored for performing any one of the instances of the above-described methods of the present disclosure.

In addition, the method steps described in the present disclosure may be implemented with a data processing program, and may also be implemented with hardware, for example, logic gates, switches, an application specific integrated circuit (ASIC), a programmable logic controller, an embedded controller, and the like. Thus, such hardware that can implement the methods of the present disclosure may also constitute the present disclosure.

The present disclosure proposes a method, apparatus, and storage medium for calculating image similarity, which use relative position information based on feature points to detect the similarity between two pictures. With regard to the image similarity algorithm based on feature points, it is found that when the two images contain the same object, the layouts of the feature points in the two images are basically the same. When the two images contain different objects, the layouts of the feature points in the two images differ significantly. Therefore, first, feature points and corresponding feature vectors in the first image and the second image are extracted, the feature points are compared, and the most matching feature points act as reference points to measure the distance between the remaining points and the reference points. It is statistically judged whether the two images are similar images according to the distance relationship. This approach can effectively overcome the detection error caused by the mismatch of the feature points, providing an effective way for image similarity calculation, and facilitating widespread promotion and application.

**Claims**

1. A method for calculating image similarity, comprising the steps of:

   S1: extracting feature points and corresponding feature vectors from a first image and a second image, respectively;
   S2: pairing all the feature points in the first image with all the feature points in the second image according to similarity by comparing first distances between the feature vectors in the first image and the feature vectors in the second image;
   S3: sorting the paired feature points according to the similarity from high to low, and selecting top N feature point pairs in the first image and the second image;
   S4: respectively randomly selecting n reference points from the top N feature point pairs in the first image and the second image, and respectively calculating X-direction and Y-direction relative positions of remaining feature points relative to the n reference points in the first image, and respectively calculating X-direction and Y-direction relative positions of remaining feature points relative to the n reference points in the second image; and

S5: calculating an X-axis distance according to the X-direction relative positions of the remaining feature points relative to the reference points respectively in the first image and the second image, calculating a Y-axis distance according to the Y-direction relative positions of the remaining feature points relative to the reference points respectively in the first image and the second image, and with respect to the calculated X-axis distance and the Y-axis distance, setting a threshold range to determine whether the first image and the second image are a same image,

wherein the step S5 specifically comprises the steps of:

S51: setting the X-direction relative positions $x_{11}, ... , x_{1i}, ... , x_{1n}$ of one of the remaining feature points relative to the n reference points in the first image as vector A;

S52: setting the X-direction relative positions $x_{21}, ... , c_{2i}, ... , x_{2n}$ of one of the remaining feature points relative to the n reference points in the second image as vector B;

S53: calculating the X-axis distance between vector A and vector B;

S54: calculating in a same manner the Y-axis distance between vectors of the Y-direction relative positions of one of the remaining feature points in the first image and the second image with respect to the n reference points.

2. The method for calculating image similarity according to claim 1, **characterized in that** an approach for extracting the feature points in the step S1 comprises a sift, orb, surf, or brisk feature point extraction algorithm.

3. The method for calculating image similarity according to claim 2, **characterized in that** the sift feature point extraction algorithm specifically comprises the steps of:

S11: detecting extreme values of a DoG scale space;

S12: deleting unstable extreme value points;

S13: determining a main direction of the feature points; and

S14: generating a descriptor of the feature points to obtain a feature vector of the feature points.

4. The method for calculating image similarity according to claim 1, **characterized in that** the first distances in the step S2 are an Euclidean distance, a Manhattan distance or a Minkowski distance, and minimum distance classification is adopted as a criterion of the similarity between the feature points in the first image and the second image.

5. The method for calculating image similarity according to claim 1, **characterized in that** the respectively calculating the relative positions of the remaining feature points relative to the reference points in either the first image and the second image in the step S4 adopts the following formula:

$$\begin{cases} x_0 = x_1 - x_2 \\ y_0 = y_1 - y_2 \end{cases}$$

wherein $x_0$ represents a relative position in the first image or the second image in a coordinate axis x direction, $x_1$ represents a coordinate position of a remaining feature point in the first image or the second image in the x direction, and $x_2$ represents a coordinate position of a reference point in the first image or the second image in the x direction, $y_0$ represents a relative position in the first image or the second image in a coordinate axis y direction, $y_1$ represents a coordinate position of a remaining feature point in the first image or the second image in the x direction, and $y_2$ represents a coordinate position of a reference point in the first image or the second image in the y direction.

6. The method for calculating image similarity according to claim 1, **characterized in that** the X-axis distance and the Y-axis distance in the step S5 comprise an included-angle cosine distance, a Manhattan distance, or a Chebyshev distance.

7. The method for calculating image similarity according to claim 6, **characterized in that** the included-angle cosine distance is calculated as:

$$\cos \theta = \frac{A \cdot B}{\|A\|\|B\|} = \frac{\sum_{i=1}^{n} A_i \times B_i}{\sqrt{\sum_{i=1}^{n} (A_i)^2} \times \sqrt{\sum_{i=1}^{n} (B_i)^2}}$$

wherein $A_i$ and $B_i$ represent components of vector A and vector B, respectively.

8. The method for calculating image similarity according to claim 1, **characterized in that** the step S5 further comprises summing the X-axis distance and the Y-axis distance, and setting a threshold range for the summed value, wherein exceeding the threshold range indicates a similar image, or a different image otherwise.

9. A computing apparatus for image similarity calculation, comprising a memory, a processor, and a computer program stored in the memory and executable on the processor, **characterized in that** when executing the computer program the processor implements the steps of the method of any one of claims 1 to 8.

10. A computer-readable storage medium storing a computer program, **characterized in that** the computer program, when executed by a processor, implements the steps of the method of any one of claims 1 to 8.

**Patentansprüche**

1. ein Verfahren zur Berechnung der Bildähnlichkeit, das die Schritte umfasst:

    S1: Extrahieren von Merkmalspunkten und entsprechenden Merkmalsvektoren s aus einem ersten Bild bzw. einem zweiten Bild;
    S2: Vergleichen Sie den ersten Abstand zwischen den Merkmalspunkten im ersten Bild und den Merkmalspunkten im zweiten Bild, indem Sie alle Merkmalspunkte im ersten Bild entsprechend der Ähnlichkeit mit allen Merkmalspunkten im zweiten Bild koppeln;
    S3: Sortieren Sie die gepaarten Merkmalspunkte entsprechend der Ähnlichkeit von hoch nach niedrig und wählen Sie die oberen N Merkmalspunktepaare im ersten Bild und im zweiten Bild aus;
    S4: Zufällig n Referenzpunkte aus den oberen N Merkmalspunktpaaren im ersten Bild und im zweiten Bild auswählen und die relative Position s der X-Richtung und Y-Richtung der verbleibenden Merkmalspunkte relativ zu den n Referenzpunkten s im ersten Bild berechnen und die relative Position s der X-Richtung und Y-Richtung der verbleibenden Merkmalspunkte relativ zu den n Referenzpunkten s im zweiten Bild berechnen; Und
    S5: berechnet einen X-Achsenabstand gemäß den relativen Positionen der verbleibenden Merkmalspunkte im ersten Bild bzw. im zweiten Bild im relativen X-Richtung des Referenzpunkts s, berechnet einen Y-Achsenabstand gemäß den relativen Positionen der verbleibenden Merkmalspunkte im ersten Bild bzw. im zweiten Bild im relativen Y-Richtung des Referenzpunkts s und in Bezug auf den berechneten X-Achsenabstand bzw. den Y-Achsenabstand, um einen Schwellenbereich festzulegen, um festzustellen, ob das erste Bild und das zweite Bild ein gleiches Bild sind,
    Wobei der Schritt S5 insbesondere die Schritte umfasst:

    S51: Setzen der relativen Positionen in der X-Richtung $x_{11}, ..., x_{1i}, ..., x_{1n}$ Eines der verbleibenden Merkmalspunkte im Verhältnis zu den n Bezugspunkten im ersten Bild als Vektor A;
    S52: Setzen der relativen Positionen in der X-Richtung $x_{21}, ..., x_{2i}, ..., x_{2n}$ Eines der verbleibenden Merkmalspunkte im Verhältnis zu den n Bezugspunkten im zweiten Bild als Vektor B;
    S53: Berechnung des X-Achsenabstands zwischen Vektor A und Vektor B;
    S54: auf die gleiche Weise den Y-Achsenabstand zwischen den Vektoren der Y-Richtung relativen Positionen eines der verbleibenden Merkmalspunkte im ersten und zweiten Bild gegenüber den n Bezugspunkten berechnet.

2. das Verfahren zur Berechnung der Bildähnlichkeit gemäß Anspruch 1, das **dadurch gekennzeichnet ist, dass** ein Verfahren zum Extrahieren der Merkmalspunkte im Schritt S1 einen Siebe-, orb-, surf- oder Brisk-Merkmalspunkte-Extraktionsalgorithmus umfasst.

3. das Verfahren zur Berechnung der Bildähnlichkeit gemäß Anspruch 2, gekennzeichnet, dass der Sieb-Merkmalspunkteextraktionsalgorithmus speziell die Schritte umfasst:

    S11: Erkennung des Extremwerts s eines Hundeskalenraums;
    S12: Löschen instabiler Extremwertpunkte;
    S13: Bestimmen einer Hauptrichtung des Merkmalspunkts s; Und
    S14: g erzeugt einen Deskriptor des Merkmalspunkts s, um einen Merkmalsvektor des Merkmalspunkts s zu erhalten.

4. das Verfahren zur Berechnung der Bildähnlichkeit gemäß Anspruch 1, das **dadurch gekennzeichnet ist, dass** die ersten Abstands s in der Schritt S2 eine euklidische Entfernung, eine Manhattan-Entfernung oder eine Minkowski-Entfernung sind und die Mindestabstandsklassifizierung als Kriterium für die Gleichheit zwischen den Merkmalspunkten s im ersten und im zweiten Bild angenommen wird.

5. das Verfahren zur Berechnung der Bildähnlichkeit gemäß Anspruch 1, das **dadurch gekennzeichnet ist, dass** die Berechnung der relativen Positionen der verbleibenden Merkmalspunkte im Verhältnis zu den Bezugspunkten entweder in dem ersten Bild und dem zweiten Bild in Schritt S4 die folgende Formel anwendet:

$$\begin{cases} x_0 = x_1 - x_2 \\ y_0 = y_1 - y_2 \end{cases}$$

Wobei $x_0$ Darstellt eine relative Position im ersten oder zweiten Bild in der Koordinatenachse x Richtung, $x_1$ Darstellt eine Koordinatenposition eines verbleibenden Merkmalspunkts im ersten oder zweiten Bild in der x-Richtung dar, und $x_2$ Darstellt eine Koordinatenposition eines Bezugspunkts im ersten oder zweiten Bild in der x-Richtung, $y_0$ Darstellt eine relative Position im ersten oder zweiten Bild in der Koordinatenachse y Richtung, $y_1$ Darstellt eine Koordinatenposition eines verbleibenden Merkmalspunkts im ersten oder zweiten Bild in der x-Richtung dar und $y_2$ Darstellt eine Koordinatenposition eines Bezugspunkts im ersten oder zweiten Bild in der y-Richtung dar.

6. das Verfahren zur Berechnung der Bildähnlichkeit gemäß Anspruch 1, gekennzeichnet, dass der X-Achsenabstand und der Y-Achsenabstand in der Schritt S5 einen einschlossenen Kosinusabstand, einen Manhattan-Abstand oder einen Chebyschew-Abstand umfassen.

7. das Verfahren zur Berechnung der Bildähnlichkeit nach Anspruch 6, gekennzeichnet, dass der einschließen Winkel-Kosinusabstand wie folgt berechnet wird:

$$\cos\theta = \frac{A \cdot B}{\|A\|\|B\|} = \frac{\sum_{i=1}^{n} A_i \times B_i}{\sqrt{\sum_{i=1}^{n}(A_i)^2} \times \sqrt{\sum_{i=1}^{n}(B_i)^2}}$$

W hier in $A_i$ und $B_i$ repräsentieren die Komponenten von Vektor A bzw. Vektor B.

8. das Verfahren zur Berechnung der Bildähnlichkeit gemäß Anspruch 1, gekennzeichnet, dass der Schritt S5 weiterhin die Summierung des X-Achsenabstands und des Y-Achsenabstands umfasst und einen Schwellenbereich für den summierten Wert festlegt, wobei die Überschreitung des Schwellenbereichs ein ähnliches Bild oder anderes Bild anzeigt.

9. eine Rechenvorrichtung zur Berechnung der Bildähnlichkeit, die einen Speicher, einen Prozessor und ein im Speicher gespeichertes und auf dem Prozessor ausführbares Computerprogramm umfasst, wobei der Prozessor bei der Ausführung des Computerprogramms die Schritte des Verfahrens gemäß einem der Ansprüche 1 bis 8 ausführt.

10. ein computerlesbares Speichermedium, das ein Computerprogramm speichert, wobei das Computerprogramm, wenn es von einem Prozessor ausgeführt wird, die Schritte des Verfahrens eines der Ansprüche 1 bis 8 ausführt.

**Revendications**

1. un procédé de calcul de la similitude dimage comprenant les étapes suivantes:

S1: extraction de points de caractéristique et de vecteurs de caractéristique correspondants s à partir dune première image et dune deuxième image, respectivement;
S2: associer tous les points de caractéristique de la première image à tous les points de caractéristique de la deuxième image en comparant la première distance entre les vecteurs de caractéristique de la première image et les vecteurs de caractéristique de la deuxième image, selon la similitude;
S3: Trier les points de caractéristique appariés en fonction de la similitude de haut à bas, sélectionner les paires de points de caractéristique supérieurs N dans la première image et la deuxième image;
S4: sélectionner respectivement au hasard n points de référence parmi les N paires de points de caractéristique supérieurs dans la première image et la deuxième image, et calculer respectivement les positions relatives s de direction X et direction Y des points de caractéristique restants par rapport au n point de référence s dans la première image, et calculer respectivement les positions relatives s de direction X et direction Y des points de caractéristique restants par rapport au n point de référence s dans la deuxième image; Et

S5: calculer une distance à laxe X selon les positions relatives en direction X des points caractéristiques restants par rapport au point de référence s respectivement dans la première image et la deuxième image, calculant une distance à laxe Y selon les positions relatives en direction Y des points caractéristiques restants par rapport au point de référence s respectivement dans la première image et la deuxième image, et en ce qui concerne la distance calculée à laxe X et la distance à laxe Y, en fixant une plage de seuil pour déterminer si la première image et la deuxième image sont une même image,

Où létape S5 comprend spécifiquement les étapes suivantes:

S51: réglage des positions relatives de direction X $x_{11}$, ..., $x_{1i}$, ..., $x_{1n}$ Un des points caractéristiques restants par rapport aux n points de référence de la première image en tant que vecteur A;

S52: réglage des positions relatives de direction X $x_{21}$, ..., $x_{2i}$, ..., $x_{2n}$ De lun des points caractéristiques restants par rapport aux n points de référence de la deuxième image en tant que vecteur B;

S53 : calcul de la distance axe-X entre le vecteur A et le vecteur B;

S54: calculant de la même manière la distance de laxe Y entre les vecteurs des positions relatives de direction Y de lun des points caractéristiques restants de la première image et de la deuxième image par rapport aux n points de référence.

2. le procédé de calcul de la similitude dimage selon la revendication 1, caractérisé en ce quune approche dextraction des points caractéristiques dans létape S1 comprend un algorithme dextraction de points caractéristiques de tamis, dorb, de surf ou de brisk.

3. le procédé de calcul de la similitude dimage selon la revendication 2, **caractérisé en ce que** lalgorithme dextraction de points caractéristiques de tamis comprend spé cifiquement les étapes suivantes:

S 11: détection de valeurs extrêmes s dun espace déchelle de chien;

S12: suppression de points de valeur extrême instables;

S13: déterminer une direction principale du point caractéristique s; Et

S14: g énerant un descripteur du point de caractéristique s pour obtenir un vecteur de caractéristique du point de caractéristique s.

4. le procédé de calcul de la similitude dimage selon la revendication 1, **caractérisé en ce que** la première distance s de létape S2 est une distance euclidienne, une distance de manhattan ou une distance minkowski, et que la classification de distance minimale est adoptée comme critère de similarité entre les points caractéristiques s de la premiè re image et la deuxième image.

5. le procédé de calcul de la similitude dimage selon la revendication 1, **caractérisé en ce que** le calcul respectivement des positions relatives des points caractéristiques restants par rapport aux points de référence soit dans la première image, soit dans la deuxième image à létape S4 adopte la formule suivante:

$$\begin{cases} x_0 = x_1 - x_2 \\ y_0 = y_1 - y_2 \end{cases}$$

Où $x_0$ Représente une position relative dans la première ou la deuxième image dans un axe de coordonnées direction x, $x_1$ Représente une position de coordonnées dun point caractéristique restant dans la première image ou la deuxième image dans la direction x, et $x_2$ Représente une position de coordonnées dun point de référence dans la première ou la deuxième image dans la direction x, $y_0$ Représente une position relative dans la première ou la deuxième image dans la direction de laxe de coordonnées y, $y_1$ Représente la position de coordonnées dun point caractéristique restant dans la première image ou la deuxième image dans la direction x, et $y_2$ Représente une position de coordonnées dun point de référence dans la première image ou la deuxième image dans la direction y.

6. le procédé de calcul de la similitude dimage selon la revendication 1, **caractérisé en ce que** la distance à laxe X et à laxe Y à létape S5 comprennent une distance à angle inclus en cosinus, une distance à manhattan ou une distance à chebyshev.

7.  le procédé de calcul de la similitude dimage selon la revendication 6, **caractérisé en ce que** la distance cosinus à angle inclus est calculée comme suit:

$$\cos\theta = \frac{A \cdot B}{\|A\|\|B\|} = \frac{\sum_{i=1}^{n} A_i \times B_i}{\sqrt{\sum_{i=1}^{n}(A_i)^2} \times \sqrt{\sum_{i=1}^{n}(B_i)^2}}$$

W ici dans $A_i$ et $B_i$ représentent respectivement les composantes du vecteur A et du vecteur B.

8.  le procédé de calcul de la similitude dimage selon la revendication 1, **caractérisé en ce que** létape S5 comprend en outre la sommation de la distance de laxe X et de la distance de laxe Y, et la fixation dune plage de seuil pour la valeur sommée, dans laquelle dépasser la plage de seuil indique une image similaire, ou une image différente sinon.

9.  un dispositif de calcul pour le calcul de la similitude dimage, comprenant une mémoire, un processeur et un programme informatique stocké dans la mémoire et exécutable sur le processeur, **caractérisé en ce que** lors de lexécution du programme informatique, le processeur met en oeuvre les étapes du procédé de lune des revendications 1 à 8.

10. support de stockage lisible par ordinateur stockant un programme informatique, **caractérisé en ce que** le programme informatique, lorsquil est exécuté par un processeur, met en oeuvre les étapes du procédé de lune des revendications 1 à 8.

Extracting feature points and corresponding feature vectors from a first image and a second image, respectively ⟩ S1

Pairing all the feature points in the first image with all the feature points in the second image according to similarity by comparing first distances between the feature vectors in the first image and the feature vectors in the second image ⟩ S2

Sorting the paired feature points according to the similarity from high to low, and selecting top N feature point pairs in the first image and the second image ⟩ S3

Randomly selecting n reference points from the top N feature point pairs in the first image and the second image, and respectively calculating X-direction and Y-direction relative positions of remaining feature points in the first image or the second image with respect to the reference points ⟩ S4

Calculating an X-axis distance according to the X-direction relative positions of the remaining feature points in the first image and the second image with respect to the reference points, calculating a Y-axis distance according to the Y-direction relative positions of the remaining feature points in the first image and the second image with respect to the reference points, calculating the X-axis distance and the Y-axis distance and setting a threshold range to determine whether the first image and the second image are a same image ⟩ S5

FIG. 1

Detecting extreme values of a DoG scale space ⟩ S11

Deleting unstable extreme value points ⟩ S12

Determining a main direction of the feature points ⟩ S13

Generating a descriptor of the feature points to obtain a feature vector of the feature points ⟩ S14

FIG. 2

Setting the X-direction relative positions $x_{11}, \ldots,$ $x_{1i}, \ldots, x_{1n}$ of one of the remaining feature points in the first image with respect to the n reference points as vector A ⟶ S51

Setting the X-direction relative positions $x_{21}, \ldots, x_{2i}, \ldots, x_{2n}$ of one of the remaining feature points in the second image with respect to the n reference points as vector B ⟶ S52

Calculating the X-axis distance between vector A and vector B ⟶ S53

Calculating in a same manner the Y-axis distance between vectors of the Y-direction relative positions of one of the remaining feature points in the first image and the second image with respect to the n reference points ⟶ S54

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2018115062742

- CN 103295022 A

### Non-patent literature cited in the description

- **FENG YE**. Multipurification of matching paires based on ORB feature and PCB alignment case study. *Journal of Electronic Imaging*, 2018, vol. 27 (3), 033029